# EUROPEAN PATENT SPECIFICATION

(11) **EP 1 969 877 B1**
(45) Date of publication and mention of the grant of the patent: **11.11.2015**
(21) Application number: 06798750.3
(22) Date of filing: 12.09.2006
(51) Int. Cl.: H04W 36/00, H04W 92/04

(54) **METHOD FOR HANDOVER IN MOBILE COMMUNICATION SYSTEM**
VERFAHREN ZUM HANDOVER IN EINEM MOBILKOMMUNIKATIONSSYSTEM
PROCEDE DE TRANSFERT DANS UN SYSTEME DE COMMUNICATION MOBILE

(30) Priority: 05.01.2006 KR 20060001148
(43) Date of publication of application: 17.09.2008
(60) Divisional application: 15185906.3
(73) Proprietor: LG ELECTRONICS INC., Yeongdeungpo-gu Seoul 150-721 (KR)
(72) Inventor: LEE, Young Dae, Gyeonggi-do 465-711 (KR); CHUN, Sung Duck, Gyeonggi-do 431-773 (KR); JUNG, Myung Cheul, Seoul 156-832 (KR); PARK, Sung Jun, Gyeonggi-do 431-749 (KR)
(74) Representative: Ter Meer Steinmeister & Partner
(86) International application number: PCT/KR2006/003622
(87) International publication number: WO 2007/078042

(56) References cited:
- EP-A2- 1 469 697
- EP-A2- 1 521 493
- WO-A1-2005/048490
- WO-A1-2005/089002
- KR-A- 20010 046 905
- US-A1- 2002 051 431
- US-A1- 2005 143 072
- US-A1- 2005 197 132
- US-B1- 6 330 448

## Description

### TECHNICAL FIELD

The present invention relates to a mobile communication system and mobile terminal for wireless communications, and more particularly, to a method for handover in a mobile communication system. Although the present invention is suitable for a wide scope of applications, it is particularly suitable for transmitting traffic on an optimal path.

### BACKGROUND ART

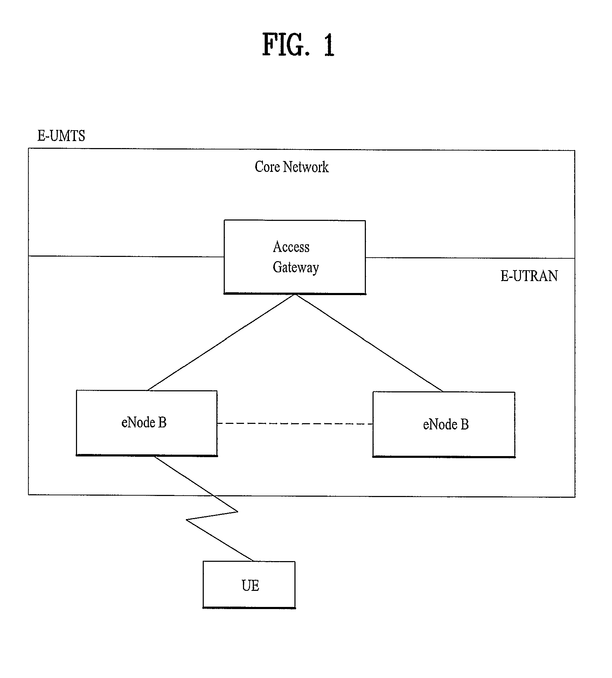

FIG. 1 is a block diagram of a network structure of E-UMTS (evolved universal mobile telecommunications system) to which a related art and the present invention are applicable.

Referring to FIG. 1, an E-UMTS is the system evolving from the conventional UMTS and its basic standardization is currently handled by the 3GPP.

First of all, E-UMTS network includes a user equipment (hereinafter abbreviated UE), a base station (hereinafter named eNode B) and an access gateway (hereinafter abbreviated AG) connected to an external network by being located at an end of the E-UMTS network.

The AG can be divided into a part responsible for user traffic handling and a part for handling control traffic. In this case, communications can be established between an AG for new user traffic handling and an AG for control traffic handling using a new interface.

And, at least one cell can exist in one eNode B. Moreover, an interface for user traffic transmission or control traffic transmission can be used between eNode Bs.

CN is able to include a node for user registrations of AG and other UEs and the like.

Besides, it is able to use an interface for discrimination between E-UTRAN and CN.

Layers of a radio interface protocol between UE and network can be classified into a first layer L1, a second layer L2 and a third layer L3 based on three lower layers of OSI (open system interconnection) reference model widely known in communication systems.

A physical layer belonging to the first layer L1 offers an information transfer service using a physical channel. And, a radio resource control (hereinafter abbreviated RRC) located at the third layer plays a role in controlling radio resources between UE and network. For this, RRC layers enable RRC messages to be exchanged between the UE and the network. And, the RRC layers can be distributively located at network nodes including eNode B, AG and the like or at either Node B or AG.

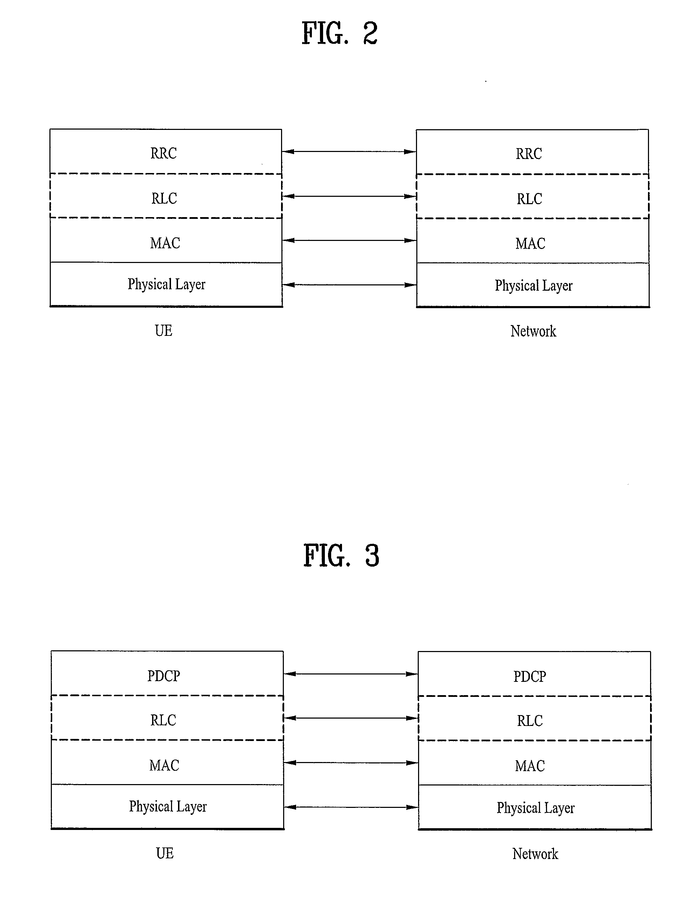

FIG. 2 is an architectural diagram of a control plane of a radio interface protocol between UE (user equipment) and UTRAN (UMTS terrestrial radio access network) based on the 3GPP radio access network standard.

Referring to FIG. 2, a radio interface protocol vertically includes a physical layer, a data link layer, and a network layer and horizontally includes a user plane for data information transfer and a control plane for signaling transfer.

The protocol layers in FIG. 2 can be divided into L1 (first layer), L2 (second layer), and L3 (third layer) based on three lower layers of the open system interconnection (OSI) standard model widely known in the communications systems.

The respective layers of a radio protocol control plane shown in FIG. 2 and a radio protocol user plane shown in FIG. 3 are explained as follows.

First of all, the physical layer as the first layer offers an information transfer service to an upper layer using a physical channel. The physical layer PHY is connected to a medium access control (hereinafter abbreviated MAC) layer above the physical layer via a transport channel. And, data are transferred between the medium access control layer and the physical layer via the transport channel. Moreover, data are transferred between different physical layers, and more particularly, between one physical layer of a transmitting side and the other physical layer of a receiving side via the physical channel.

The medium access control (hereinafter abbreviated MAC) layer of the second layer offers a service to a radio link control layer above the MAC layer via a logical channel.

The radio link control (hereinafter abbreviated RLC) layer of the second layer supports reliable data transfer.

A PDCP layer of the second layer performs a header compression function for reducing unnecessary control information to efficiently transmit data, which is transmitted using such an IP packet as IPv4 or IPv6, in a radio section having a relatively small bandwidth.

A radio resource control (hereinafter abbreviated 'RRC') layer located on a lowest part of the third layer is defined in the control plane only and is associated with configuration, reconfiguration and release of radio bearers (hereinafter abbreviated RBs) to be in charge of controlling the logical, transport and physical channels. In this case, the RB means a service offered by the second layer for the data transfer between the UE and the UTRAN.

As a downlink transport channel carrying data to UE from network, there is BCH (broadcast channel) carrying system information and downlink SCH (shared channel) carrying user traffic or control message.

Traffic or control message of downlink multicast or broadcast service can be transmitted via downlink SCH or a separate downlink MCH (multicast channel).

Meanwhile, as an uplink transport channel carrying data to network from UE, there is RACH (random access channel) carrying an initial control message and UL-SCH (uplink shared channel) carrying user traffic or control message.

EP z21493 A2 discloses a method that quickly resumes a downlink service in a hard handover in a cellular mobile communication system. To provide the fast downlink service to an MS (Mobile Station) during a hard handover from an OBS (Old Base Station) to an NBS (New Base Station), the NBS receives handover user information from the OBS, and generates an MS temporary ID using the handover user information to identify the MS. If user data is generated for the MS before a connection is established for traffic transmission between the MS and the NBS, the NBS transmits the user data to the MS on an HCCH (Handover Common Channel) using the MS temporary ID.

US 2005/0197132 A1 describes a method for allocating a frequency to a subscriber station (SS) in handover operation in an Orthogonal Frequency Division Multiple Access (OFDMA) system. In the method, the SS checks safety channel frequencies for a target base station (BS), generates a safety channel frequency request message for requesting allocation of the checked safety channel frequencies, and transmits the safety channel frequency request message. Upon receiving the safety channel frequency request message from the SS, a serving BS allocates frequencies for a requested channel, and transmits an allocation message with the frequency allocation information to the SS. The serving BS transmits a channel allocation request message to the target BS according to the frequency allocation information. Upon receiving the channel allocation request message, the target BS allocates the safety channel frequencies to the SS.

WO 2005/089002 A1 presents a method for a packet switched handover in a mobile communication system comprising a terminal, a source node and a destination node. The method comprises negotiating protocol parameters for the destination node on behalf of a new network entity, by communicating with an old network entity whilst the terminal is still connected to the source node; and completing the packet switched handover, such that service interruption is reduced.

US 2002/0051431 A1 introduces a handover controlling method in a radio network controller (RNC) connected to a first Node B and a second Node B in a mobile communication system. A so-called USTS service occurs between the first Node B and a user equipment (UE) within a cell of the first Node B and the UE hands over when the UE is located in a handover area across the cell areas of the first Node B and the second Node B adjacent to the first Node B. The method comprises determining whether the handover for the UE is possible or not; transmitting handover information to the second Node B if the handover is possible; and transmitting a command to the UE through the first Node B, requesting the UE to hand over to the second Node B if the UE receives a response message indicating that the handover is possible from the second Node B.

### DISCLOSURE OF THE INVENTION

Accordingly, the present invention is directed to a method for handover in a mobile communication system that substantially obviates one or more of the problems due to limitations and disadvantages of the related art.

An object of the present invention is to provide a method for handover in a mobile communication system, by which resource loss of a specific network is minimized in performing UE's handover.

According to the present invention, the method of independent claim 1 is presented. Features of advantageous embodiments are defined in the dependent claims.

Preferably, in case that a wireless UE attempts a connection to a radio network node except a currently connected radio network node due to mobility in the currently connected radio network node, the currently connected radio network node informs a higher access node (AG) responsible for traffic transmission of a handover message to minimize a situation that may accelerate congestion within a network due to a transmission on a non-optimized path and enable traffic to be transmitted via an optimized path.

The radio network node is a base station, Node B, eNode B, base station controller or RNC (radio network controller).

And, the access node is an anchor node, AG, SGSN, GGSN, xGSN or the like.

Moreover, the handover message is a message transmitted to another radio network node by a radio network node to which a wireless UE is currently connected. And, the wireless UE is able to instruct that a radio UE should move to a new radio network node.

The present invention is preferably performed in a network including a source base station and a target base station. And, the source and target base stations are preferably controlled by a specific higher node.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, a method for handover in a mobile communication system according to the present invention includes the steps of transmitting a handover request message to a specific second base station from a specific first base station, transmitting a handover response message indicating a completion of the handover request to the first base station, transmitting a command message instructing a user equipment to execute the handover to the user equipment, receiving a confirm message notifying that the user equipment is connected to the second base station according to the command message, transmitting a release message instructing the first base station to release a radio resource by the second base station, and transmitting a message instructing a higher node to transmit data to the second base station.

To further achieve these and other advantages and in accordance with the purpose of the present invention, in a mobile communication system having a first base station, a second base station, and a base station controlling node which controls the first base station and the second base station, a method for handover includes the steps of transmitting a handover request message, by the first base station communicating with a mobile station, requesting a preparation of a handover to the second base station, transmitting a handover response message, by the second base station, indicating a completion of the preparation of the handover to the first base station, transmitting a command message by the first base station to the mobile station, wherein the command message includes an instruction to the mobile station to perform the handover to the second base station, receiving a handover confirm message from the mobile station by the second base station, wherein the handover confirm message indicates that the mobile station has accessed to the second base station, transmitting a release message by the second base station, wherein the release message includes an instruction to the first base station to release resources and transmitting a path update message, by the second base station, instructing the controlling node to switch a user traffic path to the second base station.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a network structure of E-UMTS (evolved universal mobile telecommunications system);
FIG. 2 is an architectural diagram of a control plane of a radio interface protocol between UE (user equipment) and UTRAN (UMTS terrestrial radio access network) based on the 3GPP radio access network standard;
FIG. 3 is a diagram of respective layer in a radio protocol user plane;
FIG. 4 is a flowchart of a handover method according to one embodiment of the present invention; and
FIG. 5 is another flowchart of a handover method according to one embodiment of the present invention.

### BEST MODE FOR CARRYING OUT THE INVENTION

Reference will now be made in detail to the preferred embodiments of the present invention, examples of which are illustrated in the accompanying drawings.

In case that a wireless UE moves from a currently connected radio network node (e.g., base station) to another base station due to its mobility, user traffic may be transmitted to the wireless UE via a non-optimized path to bring about a problem of increasing congestion unnecessarily. In particular, a current radio network node, which is communicating with a mobile terminal, decides handover, makes a request for preparations for the handover to a radio network node to move, and transmits a corresponding response. Thus, the preparations for the handover are completed. So, until the completion of the preparations for the handover, it may be a problem that user traffic is transmitted via a previous radio network node to be forwarded to the radio network node to which the mobile terminal will move.

The present invention proposes a method of minimizing such an unnecessary data transmission to minimize resource loss of network. And, the specific features, operations and effects of the present invention will be implemented according to one embodiment of the present invention.

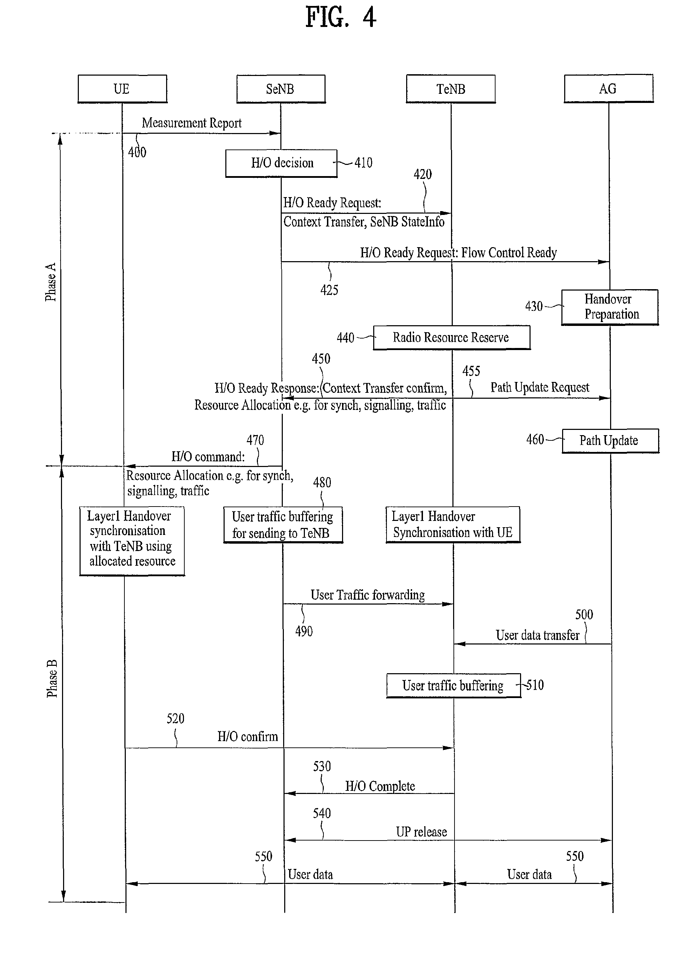

A handover process according to one embodiment of the present invention is explained with reference to FIG. 4 as follows.

FIG. 4 is a flowchart of a handover method according to one embodiment of the present invention.

Referring to FIG. 4, a handover method according to one embodiment of the present invention includes a phase-A of performing a handover command by deciding whether handover is necessary and a phase-B of receiving a signal from a new base station according to an execution of the handover after the completion of the handover command.

First of all, a UE transmits a measurement report to a serving eNode B (hereinafter abbreviated 'SeNB') (S400). It is able to use the measurement report in reporting various information for a communication environment between the UE and the SeNB. Preferably, the measurement report is used for the SeNB to decide whether a handover operation is necessary or not.

The SeNB decides whether the UE has to move away into a new target eNode B (hereinafter abbreviated 'TeNB) from a cell managed by the SeNB based on at least one of information for the measurement report received from the UE, information for load of each eNode B and information for resource availability of each eNode B (S410).

As a result of the decision, the SeNB decides to make a request for the handover to the TeNB and the AG.

The SeNB transmits a handover ready request message to the TeNB via Xur interface between the SeNB and the TeNB (S420).

In this case, the handover ready request message preferably includes at least one of UE context information (UE context) containing information for the UE and radio network node control information (eNB StatusInfo) containing information for the SeNB.

The UE context information preferably includes at least one of a UE identifier, a UE capacity, security information (security Info) and QoS (quality of service) information.

The radio network control information (eNB StatusInfo) is able to include a current use rate (e.g., occupied data quantity for the UE) of a transmitting/receiving buffer used for transmission and reception for the UE or transmitting/receiving quality information for the UE or the like.

And, the TeNB having received the handover ready request message is able to perform a flow control for user traffic transmission between the AG and the TeNB using the radio network node control information (eNB StatusInfo).

The AG makes the handover ready request to be ready for the handover in a following manner.

First of all, the SeNB transmits a handover preparation request message to the AG via Xu interface between the SeNB and the AG (S425).

The handover preparation request message plays a role in informing the AG in advance that the UE is in a situation difficult to be provided with a service via the SeNB anymore and that a handover process to the TeNB will occur in the near future. And, the handover preparation request message is able to include information for TeNB to which the handover will occur. Moreover, the handover preparation request message plays a role as a simple indicator indicating that the handover will be performed in the future.

Subsequently, the AG performs a handover preparation process after having received the handover preparation request message from the SeNB (S430).

In this case, by receiving the handover preparation request message, the AG recognizes that it is highly probable that user traffic transmitted to the SeNB will not be normally transmitted to the UE and that the user traffic may be transmitted to the TeNB via the Xur interface between the SeNB and the TeNB.

If the user traffic to be transmitted via the Xur interface increases, congestion of a network gets worse and network resource may be unnecessarily wasted. So, in order to minimize or optimize this unnecessary user traffic transmission, it is preferable to appropriately control amount and time of the user traffic transmitted to the SeNB.

For instance, the AG may not transmit user traffic toward SeNB during a predetermined time. In this case, the user traffic failing to be transmitted can be stored in the AG. For another instance, the AG is able to conduct a flow control to enable a proper quantity of user traffic to be transmitted through negotiation with the SeNB.

In performing the handover preparation process, the AG is able to drive a preparation timer. If the AG is unable to receive a path update request message from the TeNB within a predetermined time after the timer has been driven, the timer expires. So, the AG terminates the control of the flow control associated with the user traffic transmission to the SeNB and is then able to keep performing the user traffic transmission in a general situation.

Having received the handover preparation request through the step S420, the TeNB allocates radio/network resource for the user traffic transmission using the UE context information (UE context) or the radio network node control information (eNB Statuslnfo) (S440).

Subsequently, the TeNB transmits a handover ready response message to the SeNB via the Xur interface (S450).

In this case, the handover ready response message indicates that the preparation for the handover has been completed by allocating the radio/network resource for the user traffic of the UE.

Preferably, the handover ready response message includes a context transfer confirm message that confirms that the UE context information received in the step S420 has been received.

The handover ready response message is able to include resource allocation information. In this case, the resource allocation information preferably includes at least one of information of a shared channel for the transmission/reception between the UE and the TeNB, information for a synchronization channel and pilot signals.

Subsequently, the TeNB transmits a path update request message to the AG via the Xu interface (S455). In this case, the path update request message is a message that requests the AG not to transmit the user traffic to the SeNB anymore and to transmit the user traffic by establishing a new path to the TeNB.

Having received the path update request message, the AG releases the path between the AG and the SeNB to transmit the user traffic of the UE and then establishes a new path between the AG and the TeNB (S460).

After the new path has been established, the AG stops transmitting the user traffic to the SeNB but sends the user traffic to the TeNB.

Preferably, the steps S455 and S460, which are procedures for the path update, keep being executed until data is substantially transmitted to the UE. In particular, the steps S455 and S460 keep being performed until the UE receives data from a new base station. Hence, it is not always necessary for the steps S455 and S460 to be executed only after a specific step.

Subsequently, the SeNB actually commands the UE to perform the handover procedure (S470). The step S470 can be performed after a preparation procedure within a network for the handover has been completed. In the handover command, resource allocation information can be included. Preferably, the resource allocation information relates to a shared channel for transmission/reception between the UE and the TeNB, a synchronization channel and pilot signals.

It is preferable that synchronization, as shown in FIG. 4, is performed in the network including the UE and the TeNB. In particular, a procedure for the UE to gain synchronization through signaling between specific layers, e.g., first layers is performed.

After the handover command has been transmitted to the UE, the AG does not transmit user traffic via the SeNB. If there exists user traffic not transmitted by the SeNB using a wireless section, it is preferable that buffering is performed by the SeNB (S480).

The user traffic buffered by the SeNB is preferably transmitted to the TeNB (S490). In this case, transmission status information for user traffic, which is being transmitted to the UE from the SeNB, can be included. The transmission status information may include a sequence number of the transmitted user traffic.

As the new path is established by the above explained handover method, user traffic is transmitted via the AG-to-TeNB path newly established for the user traffic (S500).

The user traffic transmitted to the TeNB from the AG can be buffered within the TeNB until the TeNB receives a handover confirm message indicating that the UE is in a state capable of reception (S510).

The UE informs the TeNB via the handover confirm message that the user traffic can be received (S520). Thereafter, the UE is able to receive user traffic via the TeNB.

Subsequently, the TeNB transmits a handover complete message to the SeNB to inform the SeNB that the handover process has been successfully completed (S530).

The SeNB having received the handover complete message deletes all UE context information associated with the UE and then releases the allocated radio/network resource (S540). In particular, the SeNB releases a user plane (UP).

Finally, user traffic is transferred to the UE from the AG via the TeNB (S550).

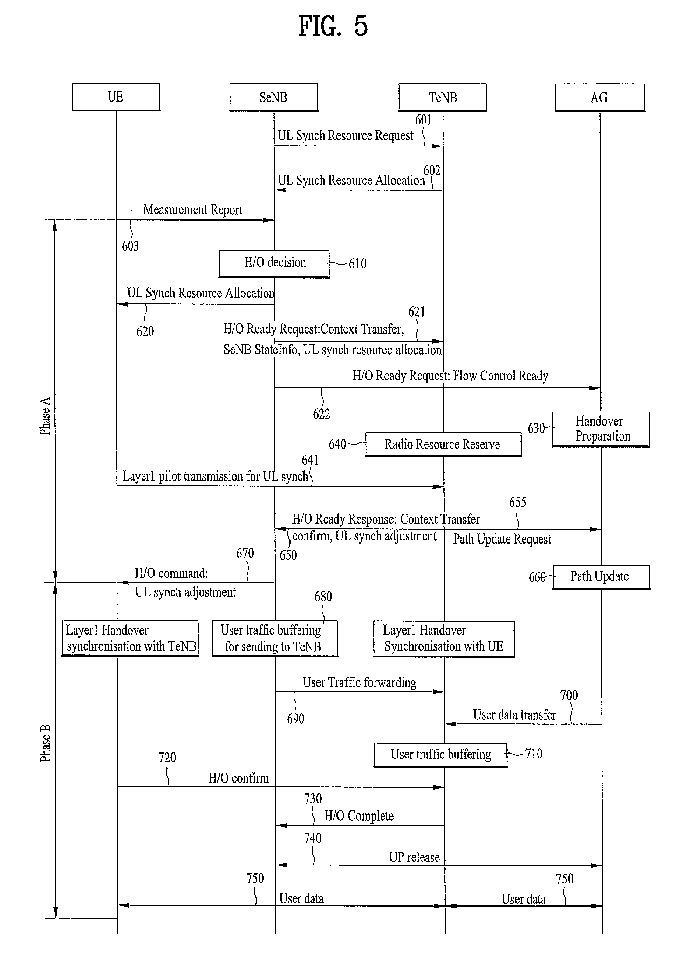

A handover method according to one embodiment of the present invention is explained with reference to FIG. 5 as follows.

FIG. 5 is another flowchart of a handover method according to one embodiment of the present invention, in which a faster handover is enabled in a manner of allocating a resource for uplink synchronization in advance from TeNB and performing an uplink synchronization using the corresponding information for the resource allocation.

Referring to FIG. 5, SeNB requests TeNB to allocate resources for an uplink synchronization of a UE (S601).

The TeNB having received an uplink (UL) synch resource request message allocates the synch resource for the uplink synchronization of the UE and then transmits it to the SeNB (S602).

Subsequently, the UE transmits a measurement report to the SeNB (S603). It is able to use the measurement report in reporting information for a communication environment between the UE and the SeNB. Preferably, the measurement report is used for the SeNB to decide whether handover is necessary or not.

The SeNB decides whether the UE needs to move from a cell managed by the SeNB to the TeNB based on the information of the measurement report received from the UE (S610). According to a result of the decision, the SeNB makes a decision for requesting a handover to the TeNB and AG.

The SeNB transmits allocation information of resource to be used by the UE for uplink (UL) synchronization with the TeNB (S620).

The SeNB transmits a handover ready request message to the TeNB via Xur interface between the SeNB and the TeNB (S621).

In this case, the handover ready request message preferably includes at least one of UE context information and radio network node control information (eNB StatusInfo) containing information for the SeNB.

The UE context information preferably includes at least one of a UE identifier, a UE capacity, security information and QoS (quality of service) information.

The radio network control information (eNB StatusInfo) is able to include a current use rate (e.g., occupied data quantity for the UE) of a transmitting/receiving buffer used for transmission and reception for the UE or transmitting/receiving quality information for the UE or the like.

And, the TeNB having received the handover ready request message is able to perform a flow control for user traffic transmission between the AG and the TeNB using the radio network node control information (eNB StatusInfo).

And, allocation information for resource transmitted to the UE in the step S620 is included in UL synch resource allocation information of the handover ready request message.

The SeNB transmits a handover preparation request message to the AG via Xu interface between the SeNB and the AG (S622).

The handover preparation request message plays a role in informing the AG in advance that the UE is in a situation difficult to be provided with a service via the SeNB anymore and that a handover process to the TeNB will occur in the near future. And, the handover preparation request message is able to include information for TeNB to which the handover will occur. Moreover, the handover preparation request message plays a role as a simple indicator indicating that the handover will be performed in the future.

Subsequently, the AG performs a handover preparation procedure after having received the handover preparation request message from the SeNB (S630).

In this case, by receiving the handover preparation request message, the AG recognizes that it is highly probable that user traffic transmitted to the SeNB will not be normally transmitted to the UE and that the user traffic may be transmitted to the TeNB via the Xur interface between the SeNB and the TeNB.

If the user traffic transmitted via the Xur interface increases, congestion of a network gets worse and network resource may be unnecessarily wasted. So, in order to minimize or optimize this unnecessary user traffic transmission, it is preferable to appropriately control amount and time of the user traffic transmitted to the SeNB.

For instance, the AG may not transmit user traffic toward SeNB during a predetermined time. In this case, the user traffic failing to be transmitted can be stored in the AG. For another instance, the AG is able to conduct a flow control to enable a proper quantity of user traffic to be transmitted through negotiation with the SeNB.

In performing the handover preparation procedure, the AG is able to drive a preparation timer. If the AG is unable to receive a path update request message from the TeNB within a predetermined time after the timer has been driven, the timer expires. So, the AG terminates the control of the flow control associated with the user traffic transmission to the SeNB and then keeps performing the user traffic transmission in a general situation.

Having received the handover preparation request through the step S621, the TeNB allocates radio/network resource for the user traffic transmission using the UE context or the radio network node control information (eNB StatusInfo) (S640).

The UE transmits first layer's pilot (Layer 1 pilot) information for uplink (UL) synchronization to the TeNB using the resource allocation information obtained in the step S620 (S641). The TeNB receives the first layer's pilot (Layer 1 pilot) information for the uplink synchronization transmitted by the UE and then decides a UL synch adjustment value for the uplink synchronization with the UE. In this case, a fine time or frequency value, which is to be adjusted by the UE for the uplink synchronization, can be included in the UL synch adjustment value.

Subsequently, the TeNB transmits a handover ready response message to the SeNB via the Xur interface (S650). And, it is able to transmit the decided UL synch adjustment value to the SeNB via the handover ready response message.

In this case, the handover ready response message indicates that the preparation for the handover has been completed by allocating the radio/network resource for the user traffic of the UE.

Preferably, the handover ready response message includes a context transfer confirm message that confirms that the UE context information received via the step S621 has been received.

The handover ready response message is able to include resource allocation information. In this case, the resource allocation information preferably includes at least one of information of a shared channel for the transmission/reception between the UE and the TeNB, information for a synchronization channel and information for pilot signals.

Subsequently, the TeNB transmits a path update request message to the AG via the Xu interface (S655). In this case, the path update request message is a message that requests the AG not to transmit the user traffic to the SeNB anymore and to transmit the user traffic by establishing a new path to the TeNB.

Having received the path update request message, the AG releases the path between the AG and the SeNB to transmit the user traffic of the UE and then establishes a new path between the AG and the TeNB (S660).

After the new path has been established, the AG stops transmitting the user traffic to the SeNB but sends the user traffic to the TeNB.

The SeNB transmits the received UL synch adjustment value via a handover (HO) command message to the UE (S670). The UE is then able to adjust the uplink synchronization with the TeNB using the received UL synch adjustment value.

After the handover command has been transmitted to the UE, the AG does not transmit user traffic via the SeNB. If there exists user traffic not transmitted by the SeNB using a wireless section, it is preferable that buffering is performed by the SeNB (S680).

The user traffic buffered by the SeNB is preferably transmitted to the TeNB (S690). In this case, transmission status information for user traffic, which is being transmitted to the UE from the SeNB, can be included. The transmission status information may include a sequence number of the transmitted user traffic.

As the new path is established by the above explained handover method, user traffic is transmitted via the AG-to-TeNB path newly established for the user traffic (S700).

The user traffic transmitted to the TeNB from the AG can be buffered within the TeNB until the TeNB receives a handover confirm message indicating that the UE is in a state capable of reception (S710).

The UE informs the TeNB via the handover confirm message that the user traffic can be received (S720). Thereafter, the UE is able to receive user traffic via the TeNB.

Subsequently, the TeNB transmits a handover complete message to the SeNB to inform the SeNB that the handover process has been successfully completed (S730).

The SeNB having received the handover complete message deletes all UE context information associated with the UE and then releases the allocated radio/network resource (S740).

Finally, user traffic is transferred to the UE from the AG via the TeNB (S750).

In FIG. 5, the handover (HO) command message can be transmitted to the UE from the SeNB. Instead, the handover command message can be directly delivered to the UE as well. In this case, the UL synch adjustment value is included in the handover command message transmitted by the TeNB but may not be included in the step S650. In this case, the UE is able to stand by to receive a message transmitted in downlink from the TeNB in a manner of switching a path to the TENT from the SeNB after having received the UL synch resource allocation message of the step S620.

### INDUSTRIAL APPLICABILITY

Accordingly, a handover method according to the present invention transmits traffic via an optimized path, thereby minimizing network resource loss.

## Claims

1. A method for performing a handover procedure at a target base station in a mobile communication system, the method comprising:
- receiving (S621), at the target base station, a first message from a serving base station, wherein the first message requests to prepare a handover of a user equipment;
- transmitting (S650), from the target base station to the serving base station, a second message as an acknowledgement in response to the first message, the second message including resource allocation information; {p. 16,1.23 - p.17,1.3, 1. 8-9}
- transmitting (S655), from the target base station to a core network, a third message for requesting a path update;
- performing synchronization with the user equipment based on the transmitted resource allocation information included in the second message; {p.17,1.22-24}
- receiving (S720), at the target base station, a fourth message from the user equipment after synchronization between the target base station and the user equipment, wherein the fourth message confirms the handover;
- transmitting (S730), from the target base station to the serving base station, a fifth message, wherein the fifth message informs about success of the handover, wherein
the first message and the second message are communicated through a first interface between the target base station and the serving base station, the first interface being different from a second interface that is used for communicating the third message between the core network and the target base station.

2. The method of claim 1, further comprising:
- receiving (S690), at the target base station, data forwarded from the serving base station.

3. The method of claim 2, wherein the data comprises data buffered in the serving base station.

4. The method of claim 2, further comprising:
- buffering (S710), at the target base station, the data forwarded by the serving base station.

5. The method of claim 1, further comprising:
- allocating (S640), at the target base station, required resources for the user equipment according to the first message.

6. The method of claim 2, wherein the target base station receives transmission status information associated with the data.

## Patentansprüche

1. Verfahren zum Ausführen einer Übergabeprozedur an einer Zielbasisstation in einem Mobilkommunikationssystem, wobei das Verfahren umfasst:
Empfangen (S621), an der Zielbasisstation, einer ersten Nachricht von einer versorgenden Basisstation, wobei die erste Nachricht anfordert, eine Übergabe eines Anwendergeräts vorzubereiten;
Senden (S650), von der Zielbasisstation zu der versorgenden Basisstation, einer zweiten Nachricht als eine Quittung in Reaktion auf die erste Nachricht, wobei die zweite Nachricht Betriebsmittelzuweisungsinformationen enthält; {S. 16, 1.23 - S. 17, 1.3, 1.8-9}
Senden (S655), von der Zielbasisstation zu einem Kernnetz, einer dritten Nachricht zum Anfordern einer Pfadaktualisierung;
Ausführen von Synchronisation mit dem Anwendergerät basierend auf den gesendeten Betriebsmittelzuweisungsinformationen, die in der zweiten Nachricht enthalten sind; {S. 17, 1.22-24}
Empfangen (S720), an der Zielbasisstation, einer vierten Nachricht von dem Anwendergerät nach der Synchronisation zwischen der Zielbasisstation und dem Anwendergerät, wobei die vierte Nachricht die Übergabe bestätigt;
Senden (S730), von der Zielbasisstation zu der versorgenden Basisstation, einer fünften Nachricht, wobei die fünfte Nachricht über den Erfolg der Übergabe informiert, wobei
die erste Nachricht und die zweite Nachricht über eine erste Schnittstelle zwischen der Zielbasisstation und der versorgenden Basisstation kommuniziert werden, wobei die erste Schnittstelle von einer zweiten Schnittstelle, die zum Kommunizieren der dritten Nachricht zwischen dem Kernnetz und der Zielbasisstation verwendet wird, verschieden ist.

2. Verfahren nach Anspruch 1, das ferner umfasst:
Empfangen (S690), an der Zielbasisstation, von Daten, die von der versorgenden Basisstation weitergeleitet werden.

3. Verfahren nach Anspruch 2, wobei die Daten in der versorgenden Basisstation gepufferte Daten umfassen.

4. Verfahren nach Anspruch 2, das ferner umfasst:
Puffern (S710), an der Zielbasisstation, der durch die versorgende Basisstation weitergeleiteten Daten.

5. Verfahren nach Anspruch 1, das ferner umfasst:
Zuweisen (S640), an der Zielbasisstation, erforderliche Betriebsmittel für das Anwendergerät gemäß der ersten Nachricht.

6. Verfahren nach Anspruch 2, wobei die Zielbasisstation Sendestatusinformationen, die den Daten zugeordnet sind, empfängt.

## Revendications

1. Procédé destiné à effectuer une procédure de transfert intercellulaire à une station de base cible dans un système de communication mobile, le procédé comprenant :
- la réception (S621), à la station de base cible, d'un premier message provenant d'une station de base de desserte, dans lequel le premier message demande de préparer un transfert intercellulaire d'un équipement d'utilisateur ;
- la transmission (S650), de la station de base cible à la station de base de desserte, d'un deuxième message en tant qu'accusé de réception en réponse au premier message, le deuxième message comprenant des informations d'allocation de ressources ; {p.16, 1. 23 - p.17, 1. 3, 1. 8-9}
- la transmission (S655), de la station de base cible à un réseau de coeur, d'un troisième message pour demander une mise à jour d'itinéraire ;
- l'exécution d'une synchronisation avec l'équipement d'utilisateur sur la base des informations d'allocation de ressources transmises incluses dans le deuxième message ; {p.17, 1. 22-24}
- la réception (S720), à la station de base cible, d'un quatrième message provenant de l'équipement d'utilisateur après une synchronisation entre la station de base cible et l'équipement d'utilisateur, dans lequel le quatrième message confirme le transfert intercellulaire ;
- la transmission (S730), de la station de base cible à la station de base de desserte, d'un cinquième message, dans lequel le cinquième message informe de la réussite du transfert intercellulaire, dans lequel
le premier message et le deuxième message sont communiqués par l'intermédiaire d'une première interface entre la station de base cible et la station de base de desserte, la première interface étant différente d'une deuxième interface qui est utilisée pour communiquer le troisième message entre le réseau de coeur et la station de base cible.

2. Procédé selon la revendication 1, comprenant en outre :
- la réception (S690), à la station de base cible, de données transmises en provenance de la station de base de desserte.

3. Procédé selon la revendication 2, dans lequel les données comprennent des données mises en mémoire tampon dans la station de base de desserte.

4. Procédé selon la revendication 2, comprenant en outre :
- la mise en mémoire tampon (S710), à la station de base cible, des données transmises par la station de base de desserte.

5. Procédé selon la revendication 1, comprenant en outre :
- l'allocation (S640), à la station de base cible, de ressources nécessaires à l'équipement d'utilisateur en fonction du premier message.

6. Procédé selon la revendication 2, dans lequel la station de base cible reçoit des informations de statut de transmission associées aux données.
